(19) Europäisches Patentamt
European Patent Office
Office européen des brevets

(11) **EP 3 526 946 B1**

(12) **FASCICULE DE BREVET EUROPEEN**

(45) Date de publication et mention de la délivrance du brevet:
**07.02.2024 Bulletin 2024/06**

(51) Classification Internationale des Brevets (IPC):
**H04L 9/40** *(2022.01)*   **H04L 9/00** *(2022.01)*
**H04L 9/30** *(2006.01)*

(21) Numéro de dépôt: **17780455.6**

(22) Date de dépôt: **12.10.2017**

(52) Classification Coopérative des Brevets (CPC):
**H04L 63/0428; H04L 9/002; H04L 9/3013**

(86) Numéro de dépôt international:
**PCT/EP2017/076109**

(87) Numéro de publication internationale:
**WO 2018/069465 (19.04.2018 Gazette 2018/16)**

(54) **PROCÉDÉ DE CHIFFREMENT, PROCÉDÉ DE DÉCHIFFREMENT, DISPOSITIF ET PROGRAMME D'ORDINATEUR CORRESPONDANT**

VERSCHLÜSSELUNGSVERFAHREN, ENTSCHLÜSSELUNGSVERFAHREN, VORRICHTUNG UND ENTSPRECHENDES COMPUTERPROGRAMM

ENCRYPTION METHOD, DECRYPTION METHOD, DEVICE AND CORRESPONDING COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.10.2016 FR 1659871**

(43) Date de publication de la demande:
**21.08.2019 Bulletin 2019/34**

(73) Titulaire: **Banks and Acquirers International Holding**
**75015 Paris (FR)**

(72) Inventeurs:
• **BEUNARDEAU, Marc**
  **75015 Paris (FR)**
• **GERAUD, Rémi**
  **26000 Valence (FR)**

• **NACCACHE, David**
  **75016 Paris (FR)**
• **CONNOLLY, Aisling**
  **75005 Paris (FR)**

(74) Mandataire: **LLR**
**11, boulevard de Sébastopol**
**75001 Paris (FR)**

(56) Documents cités:
**EP-A1- 2 378 707   US-A1- 2011 213 982**

• **ELGAMAL T: "A PUBLIC KEY CRYPTOSYSTEM AND A SIGNATURE SCHEME BASED ON DISCRETE LOGARITHMS", IEEE TRANSACTIONS ON INFORMATION THEORY, IEEE PRESS, USA, vol. 31, no. 4, 31 juillet 1985 (1985-07-31), pages 469-472, XP000565224, ISSN: 0018-9448, DOI: 10.1109/TIT.1985.1057074**

**Description**

**1. Domaine**

L'invention se rapporte au domaine du traitement de données à caractère confidentiel. La technique proposée se rapporte plus spécifiquement au chiffrement de données et au déchiffrement de ces données chiffrées.

**2. Art Antérieur**

Transmettre et recevoir des données en toute sécurité présente de nombreuses difficultés. Il s'agit tant de difficultés qui tiennent à la manière dont les données sont rendues confidentielles que de difficultés qui se rapportent aux voies par lesquelles les données sont transmises. On dispose à l'heure actuelle de nombreuses solutions pour effectuer une sécurisation des données avant leurs transmissions, par l'intermédiaire notamment de méthodes de chiffrements de données, méthodes qui reposent sur l'utilisation de clés de chiffrement, et qui se décomposent en des méthodes de chiffrement symétrique et des méthodes de chiffrement asymétriques.

Une méthode de chiffrement symétrique repose sur le partage d'une clé, qui est appelée clé partagée, et qui permet à la fois de chiffrer et de déchiffrer les données. Lorsque deux utilisateurs partagent une telle clé de chiffrement, un des problèmes (important) est de s'assurer qu'aucun des deux utilisateurs ne diffuse (accidentellement ou non) la clé partagée, sans quoi le chiffrement des données à l'aide de cette clé ne sert pas à grand-chose. Une personne malveillante, dans ce cas de figure tente donc d'obtenir la clé partagée entre les utilisateurs afin d'avoir accès aux données.

Une méthode de chiffrement asymétrique, bien plus robuste, comprend la mise en oeuvre, pour chaque utilisateur d'une couple unique de *{clé privée, clé publique}.* L'utilisateur peut partager sa clé publique à tout un chacun et conserve sa clé privée. Lorsqu'un premier utilisateur souhaite transmettre une donnée sous forme chiffrée à un deuxième utilisateur, le premier utilisateur chiffre la donnée avec la clé publique du deuxième utilisateur et la transmet. Le deuxième utilisateur reçoit cette donnée chiffrée et la déchiffre avec sa clé privée qui est la seule à pouvoir déchiffrer la donnée reçue. Ainsi, cette méthode est bien plus sécurisée que ne l'est un partage de clés. Une personne malveillante, dans ce cas de figure tente donc d'obtenir la clé privée d'un utilisateur afin d'avoir accès aux données.

Pour une personne malveillante, le problème réside donc dans une mise en oeuvre efficace des méthodes de chiffrement précédemment évoquées. Pour pallier les difficultés posées par un chiffrement efficace des données avant leur transmission, des personnes malveillantes ont donc développées de nouvelles formes d'attaques. Parmi celles-ci on trouve notamment les attaques par canaux cachés et les attaques par injection de faute. Les attaques par canaux cachés (« side channel attack ») consistent à déduire, en fonction d'un certain nombre d'indices, la valeur d'une clé (par exemple une clé privée). Un tel type d'attaque est généralement possible lorsque l'attaquant dispose d'un accès physique au dispositif qui utilise la clé. Les attaques par canaux cachés permettent de révéler des informations sur le calcul cryptographique lui-même, à savoir la procédure de signature telle qu'elle est exécutée. De telles attaques ont été démontrées dans divers contextes de la vie réelle. Les canaux cachés auxquels il est souvent fait référence comprennent par exemple le temps de calcul, la consommation électrique et les émissions électromagnétiques. Sur la base de ces informations, l'attaquant peut déduire un certain nombre de paramètres entrant en ligne de compte pour le chiffrement, et notamment certains éléments de la clé utilisée.

Une personne malveillante peut également forcer un dispositif à révéler des informations en injectant des défauts dans l'appareil. En appliquant des perturbations habiles de l'exécution de l'algorithme, beaucoup d'informations sur la clé peuvent être récupérées. Ceci est connu comme une attaque par injection de faute.

Sur la base des données récoltées, l'attaquant peut alors soit directement déduire la valeur de la clé soit réduire de manière importante le nombre de clés potentielles et effectuer des essais pour chacune des clés potentielles existantes, jusqu'à obtenir la clé recherchée.

Or, il existe peu de méthode souple, simple et efficace pour se prémunir de telles attaques. Une méthode, coûteuse, consiste à munir le dispositif de mesures de protection matérielles, empêchant son espionnage par un attaquant. Une telle solution coûte cher et n'est pas nécessairement efficace dans la mesure où de nouvelles formes d'obtention de données peuvent apparaître. Postérieurement à la création du dispositif. Une autre solution, consommatrice de ressources, consiste à effectuer un changement de clé à chaque utilisation, mais cela demande des ressources importantes tant sur le dispositif, qui doit générer une clé à chaque échange, que sur les dispositifs avec lesquels il échange des données chiffrées, qui doivent faire de même.

Il existe donc un besoin de fournir une solution qui soit résistante aux attaques par canaux cachés et aux attaques par injection de fautes tout en garantissant une facilité de mise en oeuvre, à un coût réduit.

**3. Résumé**

L'invention ne pose pas ces problèmes de l'art antérieur. Plus particulièrement, l'invention apporte une solution simple à la problématique préalablement identifiée. En effet, la présente technique permet d'offrir un niveau de sécurisation accru lors du chiffrement, de la transmission et du déchiffrement de données, et ce, sans nécessiter de calculs extensifs tant de la part du dispositif qui effectue le chiffrement des données à transmettre que de la part du dispositif qui reçoit ces données et les déchiffre.

Plus particulièrement, la présente technique porte sur une méthode de chiffrement d'un message, mis en oeuvre par un dispositif électronique de chiffrement. Un tel procédé comprend :

- une étape d'obtention d'un message courant ;
- une étape d'obtention, d'une clé de chiffrement courante
- une étape de détermination, parmi une pluralité de variantes d'un protocole de chiffrement de base, d'une variante courante dudit protocole de chiffrement ;
- une étape de chiffrement, à l'aide de ladite variante courante et de ladite clé de chiffrement, dudit message à chiffrer, délivrant un message chiffré ;
- une étape de transmission dudit message chiffré.

Ainsi, l'attaquant ne peut pas se baser sur des données connues, à un instant donné, pour construire des attaques futures. De manière sensiblement équivalente aux méthodes consistant à changer de clé de chiffrement à chaque échange, le procédé de chiffrement propose de changer la méthode de chiffrement à chaque échange. Le point clé est que cette méthode n'est pas complètement modifiée, mais juste de manière suffisante pour rendre une éventuelle attaque inopérante.

Selon une caractéristique particulière, le procédé comprend en outre une étape de transmission d'au moins une donnée représentative de ladite variante courante dudit protocole de chiffrement.

Ainsi, le dispositif récepteur est en mesure de déterminer la variante qui a été utilisée pour effectuer le chiffrement du message. Sur la base de cette information, le dispositif récepteur est alors en mesure d'effectuer un déchiffrement du message.

Selon une caractéristique particulière, ledit protocole de chiffrement de base est le protocole ElGamal, représenté par l'équation :

$$m= xr +ks \ (mod \ p\text{-}1)$$

équation dans laquelle :

- $m$ est le message courant ;
- $x$ est la clé de chiffrement courante ;
- $s$ est le message chiffré ;
- $k$ est un nombre aléatoire ;
- $r = alpha{\wedge}k \ (mod \ p)$ où $alpha$ est un générateur de $Z\_p$ et $Z\_p$ est un anneau des entiers relatifs modulo $p$ ou $p$ est un nombre premier.

Selon un mode de réalisation particulier, l'étape de détermination d'une variante du protocole de chiffrement de base comprend :

- une étape d'obtention d'au moins un index de variation d'au moins un paramètre du protocole de chiffrement ;
- une étape de valorisation, à l'aide dudit au moins un index de variation, dudit au moins un paramètre de variation dudit protocole de chiffrement, délivrant ladite variante courante.

Ainsi, en fonction d'un ou de plusieurs index de variation, il est possible de générer une variante de chiffrement. Le choix de la valeur des index de variation permet donc de gérer efficacement l'utilisation des différentes variantes du protocole de chiffrement.

Selon une caractéristique particulière, ledit au moins un index de variation est un nombre aléatoire.

Ainsi, on assure que les variantes sont utilisées de manière aléatoire et que ces aléa augmentent de manière importante les efforts à fournir (de la part d'un attaquant) pour accéder aux données chiffrées, voire rende impossible un tel accès.

Selon une caractéristique particulière, ledit au moins un index de variation, utilisé pour le chiffrement du message courant est différent d'un index de variation utilisé pour le chiffrement du message précédent.

Ainsi, on assure qu'une variante donnée ne peut être utilisée deux fois de suite pour le chiffrement de deux messages consécutifs.

Selon un mode de réalisation particulier, ledit au moins un paramètre de variation dudit protocole de chiffrement appartient au groupe comprenant :

- une variation de la taille d'au moins une variable ;
- une variation de la position d'au moins une variable ;
- une variation d'un type d'équation ;
- une variation d'un signe d'au moins une variable ;
- une adjonction d'au moins une fonction additionnelle.

Selon un autre aspect, la présente se rapporte également à un dispositif électronique de chiffrement d'un message, pour la mise en oeuvre du procédé présenté précédemment. Un tel dispositif comprend :

- des moyens d'obtention d'un message courant ;
- des moyens d'obtention, d'une clé de chiffrement courante ;
- des moyens de détermination, parmi une pluralité de variantes d'un protocole de chiffrement de base, d'une variante courante dudit protocole de chiffrement ;
- des moyens de chiffrement, à l'aide de ladite variante courante et de ladite clé de chiffrement, dudit message à chiffrer, délivrant un message chiffré ;
- des moyens de transmission dudit message chiffré.

Selon une implémentation préférée, les différentes étapes des procédés selon l'invention sont mises en oeuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

## 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un synoptique de la technique proposée, pour le chiffrement d'un message ;
- la figure 2 présente la réception d'un message chiffré par un dispositif de déchiffrement ;
- la figure 3 décrit un dispositif de chiffrement selon un mode de réalisation particulier.

## 5. Description

### 5.1. Principe général

Le principe général de la technique proposée consiste à effectuer un traitement particulier, au sein du dispositif de chiffrement. Ce traitement particulier comprend notamment une étape d'obtention d'une variante d'un algorithme de chiffrement de base, ladite variante étant déduite d'une version nominale de cet algorithme de chiffrement de base. Le chiffrement des données est effectué en utilisant la variante sélectionnée et les données chiffrées sont alors transmises au destinataire.

Dès lors, un attaquant qui possède un accès physique au dispositif, et qui peut observer les modifications apportées à ce dispositif durant l'opération de chiffrement constate, à chaque exécution d'une opération de chiffrement, un comportement différent du comportement précédemment observé. Il en résulte, pour l'attaquant, une difficulté supplémentaire dans l'interprétation des données obtenues par l'observation du comportement du dispositif. Par ailleurs, même en collectant un grand nombre de données d'observation du comportement du dispositif, l'attaquant n'est en mesure d'inférer des observations suffisamment pertinentes pour l'obtention de la clé de chiffrement. Ceci est particulièrement vrai lorsque l'algorithme de chiffrement est correctement choisi, i.e. lorsque l'algorithme de chiffrement comprend un grand nombre de variante. En effet, les deux techniques d'attaque décrites précédemment (injection de fautes et nécessitent que l'attaquant connaisse et adapte ses attaques à la mise en oeuvre de l'algorithme de chiffrement, et nécessitent la connaissance de l'algorithme utilisé. Sauf dans de rares cas d'insécurité, même avec une connaissance approfondie de la mise en oeuvre, une attaque physique doit être répétée plusieurs fois pour réussir. Pour les attaques par canaux cachés, cette répétition permet à l'attaquant de filtrer le bruit et acquérir des connaissances sur les variations très subtiles par exemple de la consommation de courant, qui peut être lié aux opérations du dispositif et la clé en cours de traitement. Pour une injection d'erreur, la répétition doit être utilisée pour deviner les bons paramètres pour obtenir l'erreur souhaitée.

Avec l'invention, l'obtention de paramètre ou d'informations pertinentes devient très compliquée. En effet, comme le processus de chiffrement varie d'une fois sur l'autre, il n'est pas aisé, voire il est impossible, de déduire un paramètre, car la répétition des tentatives d'obtention de paramètres ne permettra pas d'obtenir des informations cohérentes, dans la mesure où chaque mise en oeuvre du protocole de chiffrement est légèrement différente de la mise en oeuvre précédente.

On note que selon l'invention, et à la différence de solutions existantes au problème posé, il ne s'agit pas d'ajouter ou de modifier, dans la mise en oeuvre de l'algorithme, de fausses opérations de traitement de données. En effet, des solutions de modification algorithmiques sont connues et elles visent à se prémunir des attaques par canaux cachés. Ces solutions connues implémentent souvent un algorithme de chiffrement donné, auquel, durant l'exécution, il est ajouté des commandes fictives, dont l'objectif est de brouiller données obtenues par l'attaquant. Ces commandes fictives sont généralement inutiles dans le traitement de chiffrement. Selon l'invention, au contraire, ce sont bien des variantes qui sont utilisées, c'est-à-dire que toutes les opérations réalisées sont utiles au processus de chiffrement. On évite ainsi une surconsommation de ressources et d'énergie qui serait préjudiciable à l'autonomie ou au stockage (en mémoire sécurisée) de l'appareil. Comme la présente technique est basée sur la mise en oeuvre d'un seul algorithme, il n'y a pas besoin d'avoir plusieurs implémentations de cet algorithme. Une seule implémentation est nécessaire et suffisante. Ainsi, on réduit la quantité d'espace disponible pour stocker cette implémentation

(de manière sécurisée) au sein du dispositif et on réduit également les risques liés à de multiples implémentations (ces risques prennent essentiellement la forme d'erreur de codage ou d'implémentation qui réduisent de manière drastique les performances en termes de sécurité).

Selon l'invention, dans un mode de réalisation particulier, l'algorithme de chiffrement de base utilisé est l'algorithme ElGamal, appliqué, comme il se doit dans un cryptosystème asymétrique (comprenant une clé privée et une clé publique).

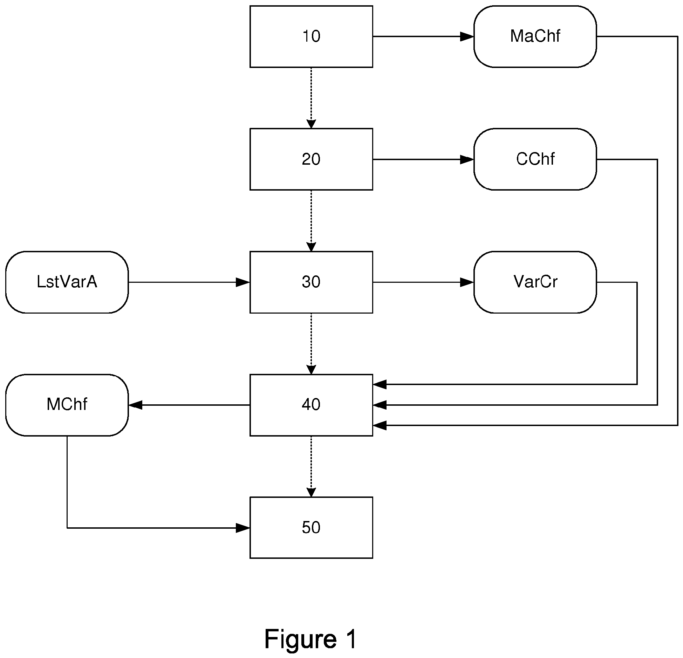

D'une manière générale, présenté en relation avec la figure 1, le procédé de l'invention comprend, au niveau du dispositif de chiffrement :

- une étape d'obtention (10) d'un message courant (MaChf) ;
- une étape d'obtention (20), d'une clé de chiffrement courante (CChf)
- une étape de détermination (30), parmi une pluralité de variantes (LstVarA) d'un algorithme de chiffrement, d'une variante courante (VarCr) dudit algorithme de chiffrement à utiliser ;
- une étape de chiffrement (40), à l'aide de ladite variante courante (VarCr) et de ladite clé de chiffrement (CChf), dudit message à chiffrer (MaChf), délivrant un message chiffré (MChf) ;
- une étape de transmission (50) dudit message chiffré (MChf).

Le message chiffré (MChf) est alors transmis à son destinataire. Cette transmission est effectuée par tout moyen approprié, que ce soit par l'intermédiaire d'un réseau de communication filaire ou sans fil ou encore directement par l'intermédiaire d'une interface matérielle (comme par exemple une transmission effectué par une carte à puce vers un terminal de lecture de carte à puce) ou encore une interface sans fil (par exemple dans le cas d'une transmission NFC, Zigbee, etc.).

Le dispositif de déchiffrement, pour sa part, met en oeuvre le procédé suivant :

- une étape de réception (R10) dudit message chiffré (MChf) ;
- une étape d'obtention (R20), d'une clé de déchiffrement courante (CdChf) ;
- une étape de détermination (R30), parmi une pluralité de variantes (LstVarA) d'un algorithme de chiffrement, d'une variante courante (VarCr) dudit algorithme de chiffrement utilisée ;
- une étape de déchiffrement (R40), à l'aide de ladite variante courante (VarCr) et de ladite clé de chiffrement (CdChf), dudit message chiffré (MChf), délivrant un message courant (MaChf).

Des modes de réalisation de l'invention mettent l'accent sur la manière dont la sélection de la variante est effectuée par le dispositif de chiffrement et sur la manière dont le dispositif de déchiffrement prend connaissance de cette variante.

Dans un premier mode de réalisation, l'étape de détermination de la variante courante comprend :

- une étape d'obtention d'un index de variation, cet index de variation étant différent de celui obtenu dans une précédente exécution du procédé de chiffrement ;
- une étape de recherche, au sein d'une liste de paramètres, à l'aide de l'index de variation, d'un ensemble de paramètres de variantes, dit paramètres de la variante courante ;
- une étape de copie des paramètres de la variante courante dans un emplacement spécifique de la mémoire sécurisée dudit dispositif.

L'étape de chiffrement, pour sa part, comprend :

- une étape d'instanciation de la variante courante du protocole de chiffrement à l'aide des paramètres de la variante courante, précédemment copiés dans la mémoire sécurisée dudit dispositif ;
- une étape de chiffrement du message à l'aide de l'instance courante du protocole de chiffrement.

L'étape de transmission du message chiffré s'accompagne pour sa part d'une transmission d'une donnée représentative de l'index de variation. L'index de variation peut être accolé au message chiffré, en tant que préfixe ou en tant que postfixe et permettre ainsi une unique transmission. La transmission de l'index de variation en même temps que le message chiffré peut sembler être contradictoire avec l'augmentation du degré de sécurisation mis en avant dans la présente : il n'en est rien. En effet, à supposer que l'attaquant soit en pleine possession du dispositif de chiffrement et dispose de toute latitude pour observer les échanges, il aura donc à sa disposition l'index de variation utilisé. Cependant, lorsque le nombre de variante est suffisamment élevé, le nombre nécessaire de tentatives de pénétration (d'injection de fautes) et/ou d'observation de canaux cachés est multiplié par le nombre de variantes possibles. Or, bien que possibles, les attaques par canaux cachés ou par injections de fautes sont longues à mettre en oeuvre, et ce même lorsqu'un seul algorithme est utilisé. Ainsi, la connaissance, par l'attaquant, de la variante utilisée pour le chiffrement n'apporte finalement pas beaucoup d'information supplémentaire à celui-ci. Par ailleurs, en lieu et place de l'index de variation, il est également possible de transmettre directement les paramètres qui constituent la variante, les uns à la suite des autres. Une telle possibilité est intéressante lorsque le dispositif de déchiffrement ne dispose pas de la liste des paramètres dans une table, comme c'est le cas pour le dispositif de chiffrement. Dans ce mode de réalisation, le dispositif de déchiffrement possède uniquement l'algorithme de variante, mais pas les paramètres de variation, et il est donc nécessaire de les lui transmettre.

Bien entendu, dans un mode de réalisation spécifique, plus sécurisé, il est possible de ne pas transmettre d'index de variation (en clair) en même temps que le message chiffré. Plusieurs possibilités sont proposées selon l'invention.

Une première possibilité consiste à chiffrer l'index de variation en utilisant la version de base du protocole de chiffrement (index de variation 0). Ainsi l'index de variation courant est chiffré puis transmis chiffré. L'avantage de cette solution est qu'elle est simple à mettre en oeuvre et ne nécessite pas de matériels spécifique du côté de du dispositif de chiffrement. Par ailleurs, si l'on considère que l'index de variation 0, de la liste des paramètres, se rapporte à la version de base du protocole de chiffrement (i.e. c'est-à-dire qu'il ne s'agit pas d'une variante), il y a un avantage complémentaire à chiffrer l'index de variation avant de la transmettre : l'attaquant, verra en effet deux exécutions successives du chiffrement dont la nature est sensiblement identique : il verra une exécution pour le chiffrement de l'index de variation et une exécution pour le chiffrement du message. On ajoute donc une complexité d'analyse des résultats obtenus par l'attaquant.

Une deuxième possibilité consiste à ne pas du tout transmettre l'index de variation. De cette façon, l'attaquant ne dispose d'aucune information sur la variante utilisée. La question se pose cependant sur la manière dont le dispositif de réception prend connaissance de la variante qui est utilisée pour chiffrer le message. Pour pallier ce problème, on met en oeuvre une technique de pré-négociation au cours de laquelle le dispositif de chiffrement et le dispositif de déchiffrement échangent non pas un index de variation, mais un générateur d'index de variation. Un générateur d'index de variation se présente par exemple sous la forme d'une fonction pseudo aléatoire et d'un paramètre. Cette fonction pseudo aléatoire et ce paramètre sont choisis par le dispositif de chiffrement, puis chiffrés à l'aide de la version de base de l'algorithme. Ils sont ensuite transmis chiffrés au dispositif de déchiffrement, lequel déchiffre l'ensemble. Cette fonction pseudo aléatoire et ce paramètre sont choisis de telle sorte qu'ils génèrent, tant sur le dispositif de chiffrement que sur le dispositif de déchiffrement, un nombre identique. Cette fonction et ce paramètre sont donc utilisés par le dispositif de chiffrement pour générer le premier index de variation de la variante qui est utilisée pour chiffrer le massage à transmettre. A la réception du message chiffré, le dispositif de déchiffrement effectue le même traitement que le dispositif de chiffrement. Il obtient l'index de variation utilisé par le dispositif de chiffrement et effectue le déchiffrement en utilisant la variante dont les paramètres sont obtenus par cet index de variation. L'index de variation obtenu, tant du côté du dispositif de chiffrement que du côté du dispositif de déchiffrement est alors utilisé comme paramètre pour la fonction aléatoire lors du chiffrement/déchiffrement du message suivant.

L'avantage de ce mode de réalisation est qu'il ne nécessite pas de chiffrer l'index de variation à chaque transmission de message. Un seul échange préalable est alors utilisé pour effectuer une « synchronisation » du dispositif de chiffrement et du dispositif de déchiffrement. L'index de variation obtenu pour un premier message est utilisé comme paramètre pour le calcul d'un index de variation suivant, ce qui assure une bonne cohérence dans la gestion des index de variation.

On note par ailleurs que même dans le cas où l'index de variation est transmis en clair par le dispositif de chiffrement (i.e. cas général), la génération de l'index de variation par le dispositif de chiffrement peut avantageusement suivre la méthode précédemment décrite, à savoir l'utilisation d'une fonction pseudo-aléatoire et un paramètre de départ, l'index de variation obtenu servant de paramètre pour la génération de l'index de variation suivant.

Dans ce qui précède, pour plus de simplicité, on a considéré que l'on ne disposait que d'un seul index de variation, permettant d'identifier de manière unique une variante du protocole de chiffrement (au sein d'une liste par exemple). Bien entendu, ceci est un exemple et dans le mode de réalisation présenté infra, plusieurs index de variation sont utilisés, chacun se rapportant à une variation différente du protocole de chiffrement. Il est ainsi possible de transmettre plusieurs index de variation, chaque index se rapportant à une variation donnée. Dans ce cas, la gestion des index est réalisée selon la présentation précédente.

Dans la carde de la présente, il est par ailleurs précisé qu'un dispositif de chiffrement peut prendre la forme de n'importe quel dispositif. Il peut par exemple s'agir d'un terminal de communication de type smartphone, d'un terminal de paiement, d'un ordinateur, d'une carte bancaire disposant d'un microprocesseur. Il en est de même pour le dispositif de déchiffrement, qui peut prendre la forme de n'importe quel dispositif. Il peut par exemple s'agir d'un terminal de communication de type smartphone, d'un terminal de paiement, d'un ordinateur, d'une carte bancaire disposant d'un microprocesseur. Par ailleurs, un dispositif peut, lors d'échanges avec un autre dispositif jouer alternativement le rôle de dispositif de chiffrement et de dispositif de déchiffrement au fur et à mesure des échanges de messages.

5.2. Description d'un mode de réalisation

Le principe général a été décrit sur la base de l'utilisation d'un algorithme général comprenant un certain nombre de variantes. Dans ce mode de réalisation, on décrit l'application de ce principe général au protocole ElGamal.

Le protocole ElGamal comprend un certain nombre de variantes connues, qui sont par exemple les variantes de Schnor, le « *Digital signature algorithm* » (DSA) ou encore le « Cramer-shoup ». Le protocole ElGamal original peut être décrit par l'équation suivante :

$$m= xr +ks \ (mod \ p\text{-}1) \qquad (1)$$

équation dans laquelle :

- **m** est le message ;
- **x** est une clé secrète ;
- **s** est la signature ;
- **k** est un nonce (généré aléatoirement et utilisé qu'une fois) ;
- **r = alpha^k (mod p)** (alpha à la puissance k où alpha est un générateur de **Z_p, anneau des entiers relatifs modulo p ou p est un nombre premier)**

Une telle équation permet de définir à la fois la signature (le chiffrement) effectué sur le message et m et la vérification de la signature (ou du message chiffré).

Les variantes possibles du protocole ElGamal peuvent s'articuler autour de variations d'un certain nombre de types de paramètres. Ces types de paramètres et ces variations sont :

i. la taille
Il est possible de faire varier la taille de **p** et il est possible de raccourcir la signature en la calculant module **(mod) q** au lieu de modulo **(mod) p-1**, avec **q** étant un diviseur de **p-1**.
ii. l'échange des variables **m, r, s**
Il est possible de modifier les places des variables **m, r, s** dans l'équation originale, et ce sans perte de niveau de sécurité. Par exemple, l'équation suivante produit des résultats qui sont équivalents à l'équation précédente :

$$r = xm +ks \ (mod \ p\text{-}1) \qquad (2)$$

iii. type d'équation
Il est également possible de «grouper» des variables. Par exemple un « regroupement » des variables **m, r, s** (en les multipliant) conduit à l'équation suivante

$$mr = xs + k \ (mod \ p\text{-}1) \qquad (3)$$

iv. signes
Il est possible d'inverser les signes des valeurs des variables. Il est par exemple possible de multiplier les valeurs des variables **m, r,** ou s par **-1.**
v. choix de fonctions **f** et **g**
Il est également possible de sélectionner des fonctions additionnelles qui respectent des propriétés prédéfinies. On peut ainsi par exemple choisir deux fonctions additionnelles **f et g** telles que :

$$f(m,r) = r \ g(m,s) + k \ (mod \ p\text{-}1) \qquad (4)$$

**f** ou **g** peuvent par exemple être l'équivalence bit à bit ou le **xor** bit à bit.
Les variations précédemment présentées sont bien entendues combinables entre elles. Ainsi, il est possible d'échanger les variables tout en multipliant leur valeur par -1 et en sélectionnant une ou deux fonctions additionnelles.

En combinat ces variations on peut par exemple une équation du type :

$$r <\text{-}> s = x \ (m \ xor \ s) - k \ (mod \ (p\text{-}1)/2) \qquad (5)$$

Cette équation est tout à fait équivalente à l'équation (1) (2) (3) ou (4) en termes de résultat obtenu.

En fonction des mises en oeuvre, bien entendu, les équations obtenues peuvent (ou non) permettre une inversion du résultat. Cela signifie que pour certaines de ces équations, la transmission du message « en clair » est nécessaire, l'équation en elle-même étant utilisée pour générer une signature du message (signature qui est elle-même vérifiée par le dispositif récepteur). D'autres équations sont inversibles et ne nécessitent que la transmission du message chiffré.

Dans ce mode de réalisation, une variante est décrite par un choix de paramètres. Par analogie, un choix de variante revient à définir une table (quelle table utilise-t-on), comprenant l'ensemble des paramètres « modifiables » dans une variante et à préciser la ligne et la colonne de cette table. Ainsi, une variante consiste en une sélection d'un ordonnancement des variables *m, r, s* (ii.), puis une sélection de signes pour ces variables (iii.). Une fois ces sélections effectuées, une fonction prends en arguments deux indices qui donnent par exemple selon l'ordre établis *m, s, r* et -, -, + et génère l'équation *-m = -xs + kr*.

Ainsi la réalisation est simple, puisque les tables à maintenir sont petites (il y a peu de choix à chaque étape). Il n'est donc pas nécessaire de disposer d'un algorithme qui soit adapté à chaque variante. Pour reprendre l'exemple précédent, il faut et il suffit de disposer des briques nécessaires à la mise en oeuvre de chaque variation (choix de l'ordre, choix des signes, etc.) pour disposer de la mise en oeuvre correspondante de l'algorithme.

Comme explicité précédemment, il y a plusieurs possibilités pour cela. Soit on dispose d'une liste prédéfinie, dans laquelle un nombre important de variantes est paramétré et on sélectionne au hasard une variante dans cette liste. Ce mode de réalisation présente l'avantage de ne pas nécessiter beaucoup de d'opération lors du choix d'une variante. A l'inverse, il est possible de disposer d'un nombre plus important de liste, chacune de ces liste s'appliquant à un type de variation (taille, échange, type, signe) et à sélectionner au hasard parmi ces types de variation, ceux que l'on applique.

5.3. Autres caractéristiques et avantages

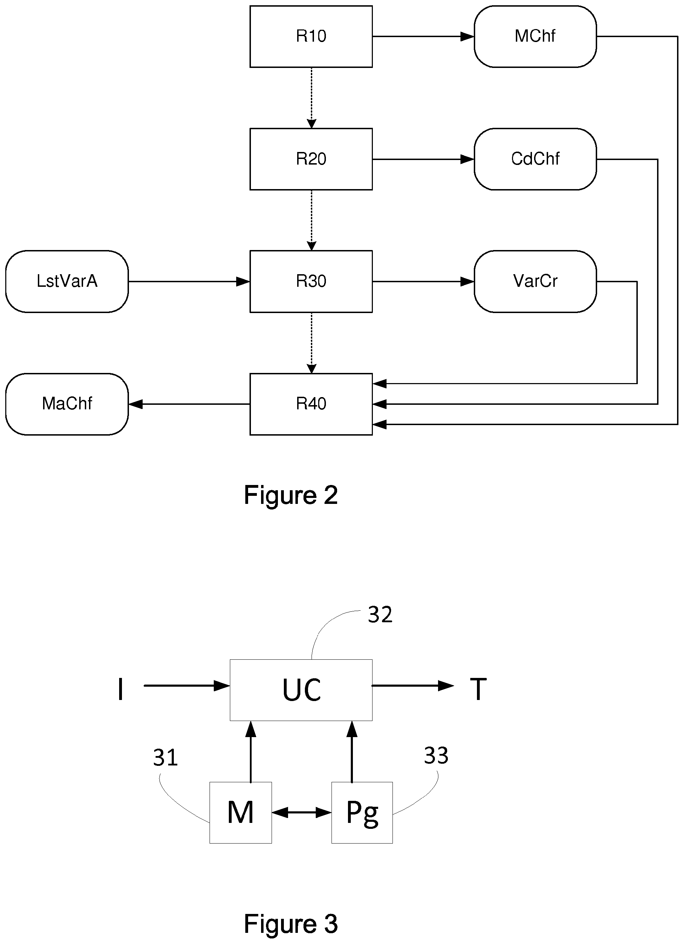

On décrit, en relation avec la figure 3, un dispositif de chiffrement mis en oeuvre pour gérer, localement, des variantes de protocole de chiffrement, selon le procédé décrit préalablement.

Par exemple, le dispositif de chiffrement comprend une mémoire 31 comprenant par exemple une mémoire tampon, un processeur de traitement général 32, équipée par exemple d'un microprocesseur, et pilotée par un programme d'ordinateur 33, et/ou une mémoire sécurisée 34, un processeur de traitement sécurisé 35, pilotée par un programme d'ordinateur 36, ces unités de traitement mettant en oeuvre des procédés de traitement de données tels que décrits précédemment pour effectuer des traitements de chiffrement, traitement de chiffrement qui sont paramétrés en fonction de la sélection d'une variante d'exécution du protocole de chiffrement.

À l'initialisation, les instructions de code du programme d'ordinateur 36 sont par exemple chargées dans une mémoire avant d'être exécutées par le processeur de traitement sécurisé 35. Le processeur de traitement 35 reçoit en entrée au moins une donnée représentative d'un message et une donnée représentative d'une clé de chiffrement. Le processeur de traitement sécurisé 35 met en oeuvre les étapes du procédé de chiffrement, selon les instructions du programme d'ordinateur 36 pour sélectionner une variante de protocole de chiffrement et chiffrer le message à l'aide de cette variante et de la clé de chiffrement et transmettre ce message chiffrer à son destinataire.

Pour cela, le dispositif de chiffrement comprend, outre la mémoire 34, des moyens de communications, tels que des modules de communication réseau, des moyens de transmission de donnée et des circuits de transmission de données entre les divers composants du dispositif de chiffrement.

Les moyens précédemment décrits peuvent se présenter sous la forme d'un processeur particulier implémenté au sein d'un terminal, tel qu'un terminal de paiement. Selon un mode de réalisation particulier, le dispositif de chiffrement met en oeuvre une application particulière qui est en charge de la réalisation des opérations précédemment décrites, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

Le dispositif de déchiffrement n'est pas représenté. Il se présente essentiellement de la même manière que le dispositif de chiffrement et comprend des moyens identiques ou équivalents, permettant d'une part de déterminer une variante d'un protocole de chiffrement et d'autre part de déchiffrer des messages en fonction d'une variante de protocole de chiffrement (et donc de déchiffrement) utilisée.

**Revendications**

1. Procédé de chiffrement d'un message, mis en oeuvre par un dispositif électronique de chiffrement, procédé **caractérisé en ce qu'**il comprend :

- une étape d'obtention (10) d'un message courant (MaChf) ;
- une étape d'obtention (20), d'une clé de chiffrement courante (CChf) ;
- une étape de détermination (30), parmi une pluralité de variantes (LstVarA) d'un protocole de chiffrement de base, d'une variante courante (VarCr) dudit protocole de chiffrement ;
- une étape de chiffrement (40), à l'aide de ladite variante courante (VarCr) et de ladite clé de chiffrement (CChf), dudit message à chiffrer (MaChf), délivrant un message chiffré (MChf) ;
- une étape de transmission (50) dudit message chiffré (MChf), et
**en ce que** ladite étape de détermination d'une variante du protocole de chiffrement de base comprend :

- une étape d'obtention d'au moins un index de variation d'au moins un paramètre du protocole de chiffrement ;
- une étape de valorisation, à l'aide dudit au moins un index de variation, dudit au moins un paramètre de variation dudit protocole de chiffrement, délivrant ladite variante courante (VarCr),
ledit au moins un paramètre de variation dudit protocole de chiffrement appartient au groupe comprenant :
- une variation de la taille d'au moins une variable ;
- une variation de la position d'au moins une variable ;
- une variation d'un type d'équation ;
- une variation d'un signe d'au moins une variable ;
- une adjonction d'au moins une fonction additionnelle.

2. Procédé de chiffrement selon la revendication 1, **caractérisé en ce qu'**il comprend en outre une étape de transmission d'au moins une donnée représentative de ladite variante courante (VarCr) dudit protocole de chiffrement.

3. Procédé de chiffrement selon la revendication 1, **caractérisé en ce que** ledit protocole de chiffrement de base est le protocole ElGamal, représenté par l'équation :

$$m= xr +ks \ (mod \ p\text{-}1)$$

équation dans laquelle :

- $m$ est le message courant ;
- $x$ est la clé de chiffrement courante ;
- $s$ est le message chiffré ;
- $k$ est un nombre aléatoire ;
- $r = alpha\hat{\ }k \ (mod \ p)$ où $alpha$ est un générateur de $Z\_p$ et $Z\_p$ est un anneau des entiers relatifs modulo $p$ ou $p$ est un nombre premier.

4. Procédé de chiffrement selon la revendication 1, caractérisé en ce ledit au moins un index de variation est un nombre aléatoire.

5. Procédé de chiffrement selon la revendication 1, caractérisé en ce ledit au moins un index de variation, utilisé pour le chiffrement du message courant est différent d'un index de variation utilisé pour le chiffrement du message précédent.

6. Dispositif électronique de chiffrement d'un message **caractérisé en ce qu'**il comprend :

- des moyens d'obtention d'un message courant (MaChf) ;
- des moyens d'obtention, d'une clé de chiffrement courante (CChf) ;
- des moyens de détermination, parmi une pluralité de variantes (LstVarA) d'un protocole de chiffrement de base, d'une variante courante (VarCr) dudit protocole de chiffrement ;
- des moyens de chiffrement, à l'aide de ladite variante courante (VarCr) et de ladite clé de chiffrement (CChf), dudit message à chiffrer (MaChf), délivrant un message chiffré (MChf) ;
- des moyens de transmission dudit message chiffré (MChf), et **en ce que** les moyens de détermination comprennent :
- des moyens d'obtention d'au moins un index de variation d'au moins un paramètre du protocole de chiffrement ; et
- des moyens de valorisation, à l'aide dudit au moins un index de variation, dudit au moins un paramètre de variation dudit protocole de chiffrement, délivrant ladite variante courante (VarCr),
ledit au moins un paramètre de variation dudit protocole de chiffrement appartient au groupe comprenant :
- une variation de la taille d'au moins une variable ;
- une variation de la position d'au moins une variable ;
- une variation d'un type d'équation ;
- une variation d'un signe d'au moins une variable ;
- une adjonction d'au moins une fonction additionnelle.

**7.** Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de chiffrement selon la revendication 1, lorsqu'il est exécuté sur un processeur.

**Patentansprüche**

**1.** Verfahren zum Verschlüsseln einer Nachricht, das von einer elektronischen Verschlüsselungsvorrichtung durchgeführt wird, wobei das Verfahren **dadurch gekennzeichnet ist, dass** es umfasst:

- einen Schritt zum Erhalten (10) einer aktuellen Nachricht (MaChf);
- einen Schritt zum Erhalten (20) eines aktuellen Verschlüsselungsschlüssels (CChf);
- einen Schritt zum Ermitteln (30), aus einer Mehrzahl von Varianten (LstVarA) eines Basisverschlüsselungsprotokolls, einer aktuellen Variante (VarCr) des Verschlüsselungsprotokolls;
- einen Schritt zum Verschlüsseln (40), mittels der aktuellen Variante (VarCr) und des Verschlüsselungsschlüssels (CChf), der zu verschlüsselnden Nachricht (MaChf), der eine verschlüsselte Nachricht (MChf) ausgibt;
- einen Schritt zum Senden (50) der verschlüsselten Nachricht (MChf),
und dass der Schritt zum Ermitteln einer Variante des Basisverschlüsselungsprotokolls umfasst:
- einen Schritt zum Erhalten wenigstens eines Veränderungsindex wenigstens eines Parameters des Verschlüsselungsprotokolls;
- einen Schritt zum Bewerten, mittels des wenigstens einen Veränderungsindex, des wenigstens einen Veränderungsparameters des Verschlüsselungsprotokolls, der die aktuelle Variante (VarCr) ausgibt;
wobei der wenigstens eine Veränderungsparameter des Verschlüsselungsprotokolls zu der Gruppe gehört, umfassend:
- eine Veränderung der Größe wenigstens einer Variable;
- eine Veränderung der Position wenigstens einer Variable;
- eine Veränderung eines Gleichungstyps;
- eine Veränderung eines Vorzeichens wenigstens einer Variable;
- eine Hinzufügung wenigstens einer Zusatzfunktion.

**2.** Verschlüsselungsverfahren nach Anspruch 1, **dadurch gekennzeichnet, dass** es ferner einen Schritt zum Senden wenigstens eines für die aktuelle Variante (VarCr) des Verschlüsselungsprotokolls repräsentativen Datenelements umfasst.

**3.** Verschlüsselungsverfahren nach Anspruch 1, **dadurch gekennzeichnet, dass** das Basisverschlüsselungsprotokoll das Protokoll von ElGamal ist, das durch die Gleichung:

$$m = xr + ks \ (mod \ p\text{-}1)$$

repräsentiert wird, wobei in dieser Gleichung:

- $m$ die aktuelle Nachricht ist;
- $x$ der aktuelle Verschlüsselungsschlüssel ist;
- $s$ die verschlüsselte Nachricht ist;
- $k$ eine Zufallszahl ist;
$r = alpha^k \ (mod \ p)$, wobei $alpha$ ein Generator von $Z\_p$ ist und $Z\_p$ ein Ring der ganzen Zahlen modulo $p$ ist oder $p$ eine Primzahl ist.

4. Verschlüsselungsverfahren nach Anspruch 1, **dadurch gekennzeichnet, dass** der wenigstens eine Veränderungsindex eine Zufallszahl ist.

5. Verschlüsselungsverfahren nach Anspruch 1, **dadurch gekennzeichnet, dass** der wenigstens eine Veränderungsindex, der für die Verschlüsselung der aktuellen Nachricht verwendet wird, verschieden ist von einem Veränderungsindex, der für die Verschlüsselung der vorherigenNachricht verwendet wurde.

6. Elektronische Vorrichtung zur Verschlüsselung einer Nachricht **dadurch gekennzeichnet, dass** sie umfasst:

   - Mittel zum Erhalten einer aktuellen Nachricht (MaChf);
   - Mittel zum Erhalten eines aktuellen Verschlüsselungsschlüssels (CChf);
   - Mittel zum Ermitteln, aus einer Mehrzahl von Varianten (LstVarA) eines Basisverschlüsselungsprotokolls, einer aktuellen Variante (VarCr) des Verschlüsselungsprotokolls;
   - Mittel zum Verschlüsseln, mittels der aktuellen Variante (VarCr) und des Verschlüsselungsschlüssels (CChf), der zu verschlüsselnden Nachricht (MaChf), die eine verschlüsselte Nachricht (MChf) ausgeben;
   - Mittel zum Senden der verschlüsselten Nachricht (MChf),

   und dass die Ermittlungsmittel umfassen:

   - Mittel zum Erhalten wenigstens eines Veränderungsindex wenigstens eines Parameters des Verschlüsselungsprotokolls; und
   - Mittel zum Bewerten, mittels des wenigstens einen Veränderungsindex, des wenigstens einen Veränderungsparameters des Verschlüsselungsprotokolls, die die aktuelle Variante (VarCr) ausgeben,

   wobei der wenigstens eine Veränderungsparameter des Verschlüsselungsprotokolls zu der Gruppe gehört, umfassend:

   - eine Veränderung der Größe wenigstens einer Variable;
   - eine Veränderung der Position wenigstens einer Variable;
   - eine Veränderung eines Gleichungstyps;
   - eine Veränderung eines Vorzeichens wenigstens einer Variable;
   - eine Hinzufügung wenigstens einer Zusatzfunktion.

7. Computerprogramm, das aus einem Kommunikationsnetz heruntergeladen werden kann und/oder auf einem computerlesbaren Träger gespeichert und/oder von einem Mikroprozessor ausführbar ist, **dadurch gekennzeichnet, dass** es Programmcode-Anweisungen für die Durchführung eines Verschlüsselungsverfahrens nach Anspruch 1 umfasst, wenn es auf einem Prozessor ausgeführt wird.

**Claims**

1. Method for encrypting a message, implemented by an electronic encryption device, method **characterised in that** it comprises:

   - a step of obtaining (10) a current message (MaChf);
   - a step of obtaining (20) a current encryption key (CChf);
   - a step of determining (30), from a plurality of variants (LstVarA) of a basic encryption protocol, a current variant (VarCr) of said encryption protocol;
   - a step of encrypting (40), using said current variant (VarCr) and said encryption key (CChf), said message to be encrypted (MaChf), delivering an encrypted message (MChf);
   - a step of transmitting (50) said encrypted message (MChf), and

   **in that** said step of determining a variant of the basic encryption protocol comprises:

   - a step of obtaining at least one variation index of at least one parameter of the encryption protocol;
   - a step of valorising, using said at least one variation index, said at least one variation parameter of said encryption protocol, delivering said current variant (VarCr),

said at least one variation parameter of said encryption protocol belonging to the group comprising:

- a variation of the size of at least one variable;
- a variation of the position of at least one variable;
- a variation of an equation type;
- a variation of a sign of at least one variable;
- an addition of at least one additional function.

2. Encryption method according to claim 1, **characterised in that** it further comprises a step of transmitting at least one data item representative of said current variant (VarCr) of said encryption protocol.

3. Encryption method according to claim 1, **characterised in that** said basic encryption protocol is the protocol ElGamal, represented by the equation:

$$m = xr + ks \ (mod \ p\text{-}1)$$

equation where:

- $m$ is the current message;
- $x$ is the current encryption key;
- $s$ is the encrypted message;
- $k$ is a random number;
- $r = alpha^k \ (mod \ p)$ where $alpha$ is a generator of $Z\_p$ and $Z\_p$ is a ring of the relative integers modulo p where p is a prime number.

4. Encryption method according to claim 1, **characterised in that** said at least one variation index is a random number.

5. Encryption method according to claim 1, **characterised in that** said at least one variation index used to encrypt the current message is different from a variation index used to encrypt the previous message.

6. Electronic device for encrypting a message, **characterised in that** it comprises:

- means for obtaining a current message (MaChf);
- means for obtaining a current encryption key (CChf);
- means for determining, from a plurality of variants (LstVarA) of a basic encryption protocol, a current variant (VarCr) of said encryption protocol;
- means for encrypting, using said current variant (VarCr) and said encryption key (CChf), said message to be encrypted (MaChf), delivering an encrypted message (MChf);
- means for transmitting said encrypted message (MChf), and **in that** the determination means comprise:

  - means for obtaining at least one variation index of at least one parameter of the encryption protocol; and
  - means for valorising, using said at least one variation index, said at least one variation parameter of said encryption protocol, delivering said current variant (VarCr),

said at least one variation parameter of said encryption protocol belonging to the group comprising:

- a variation of the size of at least one variable;
- a variation of the position of at least one variable;
- a variation of an equation type;
- a variation of a sign of at least one variable;
- an addition of at least one additional function.

7. Computer program product downloadable from a communication network and/or stored on a computer-readable medium and/or executable by a microprocessor, **characterised in that** it comprises program code instructions to execute an encryption method according to claim 1, when it is executed on a processor.

Figure 1

Figure 2

Figure 3